# EUROPÄISCHE PATENTSCHRIFT

(11) **EP 2 572 584 B1**
(45) Veröffentlichungstag und Bekanntmachung des Hinweises auf die Patenterteilung: **02.03.2016**
(21) Anmeldenummer: 12185557.1
(22) Anmeldetag: 21.09.2012
(51) Int. Cl.: A21C 1/06, B01F 7/04

(54) **Vorrichtung und Verfahren zur Verarbeitung eines Lebensmittels, insbesondere zur Verarbeitung von Teig**
Apparatus and method for processing a food item, in particular for processing dough
Dispositif et procédé de traitement d'un aliment, notamment de traitement de la pâte

(30) Priorität: 23.09.2011 DE 102011083356
(43) Veröffentlichungstag der Anmeldung: 27.03.2013
(73) Patentinhaber: VEMAG Maschinenbau GmbH, 27283 Verden/Aller (DE)
(72) Erfinder: Bruns, Andreas, 27619 Schiffdorf (DE); Drescher, Mirko, 27308 Kirchlinteln-Hohenaverbergen (DE); Kiel, Tobias, 27283 Verden/Aller (DE); Nilsson, Kersten, 27283 Verden/Aller (DE)
(74) Vertreter: Eisenführ Speiser

(56) Entgegenhaltungen:
- WO-A1-92/17068
- WO-A1-92/22208
- WO-A1-2008/101559
- CH-A- 389 531
- DE-A1- 19 512 230
- DE-B- 1 030 787
- DE-B- 1 156 032
- FR-A- 1 326 446
- FR-A1- 2 833 463
- US-A- 3 738 617

## Beschreibung

Die vorliegende Erfindung betrifft eine Vorrichtung und ein Verfahren zur Verarbeitung eines Lebensmittels, insbesondere zur Verarbeitung von Teig.

Die Erfindung betrifft insbesondere eine solche Vorrichtung nach dem Oberbegriff von Anspruch1.

Solche Vorrichtungen werden insbesondere zur automatisierten Herstellung und Verarbeitung von Teigwaren eingesetzt, aber auch in anderen Bereichen der Lebensmittelindustrie, wo beispielsweise Wurstbrät verarbeitet wird. Angesichts des hohen Kostendruck sind insbesondere in industriellem Maßstab automatisierte Anlagen weit verbreitet, in welchen die Lebensmittel (auch Produkt genannt) ausgehend von Zwischenprodukten oder Ausgangs-Zutaten in geschlossenen Systemen zu einem fertigen Produkt verarbeitet werden.

Bekannte Vorrichtungen zur Verarbeitung von Teig weisen einen geschlossenen Förderweg auf, innerhalb dessen eine Fördereinrichtung zur Aufnahme und Förderung des Lebensmittels vorgesehen ist. Als Fördereinrichtung werden nicht ausschließlich, aber vorwiegend Volumenförderer verwendet. In den Volumenkammern dieser Volumenförderer werden Lebensmittel, insbesondere Teigwaren, während des Förderns umgewälzt und auf diese Welse wechselnden Scherbeanspruchungen ausgesetzt. Durch diese Scherbeanspruchungen kommt es zu Schäden in der Struktur des zu verarbeitenden Lebensmittels, insbesondere Teigs. So entsteht ein inhomogenes Lebensmittelgefüge. Diese Inhomogenitäten wirken sich in schwankender und teilweise nicht zufriedenstellender Produktqualität aus.

Um diesem Nachteil entgegenzuwirken, wird erforderlichenfalls bei bekannten Systemen das aus dem Lebensmittel-Auslass abgegebene Lebensmittel in einem separaten System oder händisch nachbehandelt, um entstandene Inhomogenitäten auszugleichen. Dies ist zeit- und kostenaufwendig.

Aus der DE 1 030 787 A ist eine Vorrichtung zum Verarbeiten eines Lebensmittels bekannt, welche einen sich von einem Lebensmitteleinlass zu einem Lebensmittelauslass erstreckenden Förderweg aufweist. Die Vorrichtung weist im Förderweg eine Fördereinrichtung zur Aufnahme und Förderung des Lebensmittels entlang des Förderweges in Richtung des Lebensmittelauslasses auf. Im Förderweg stromabwärts der Fördereinrichtung ist eine Behandlungskammer zur Aufnahme und Nachbehandlung des Lebensmittels vorgesehen, innerhalb welcher ein Knetmittel rotatorisch antreibbar ist, wobei das Knetmittel eine Knetwelle und ein oder mehrere auf der Knetwelle angeordnete Knetelemente aufweist.

DE 195 12 230 A1 offenbart eine Vorrichtung zum Verarbeiten von Lebensmitteln, die einen Lebensmitteleinlass, einen sich an den Einlass anschließende Förderweg und ein Lebensmittelauslass am Ende des Förderweges aufweist. Im Förderweg ist eine Fördereinrichtung vorgesehen, die sich vom Lebensmitteleinlass bis zum Lebensmittelauslass erstreckt. Die Fördereinrichtung weist eine Doppelschraubenspindel mit drei hintereinander angeordneten Abschnitten auf, welche unterschiedliche Flankensteigungen haben.

Die WO 2008/101559 A1 offenbart eine Vorrichtung zur Lebensmittelverarbeitung, die einen Lebensmitteleinlass und einen Lebensmittelauslass und einen sich zwischen Einlass und Auslass erstreckenden Förderweg aufweist. Entlang des Förderweges ist eine Vormisch- und Hydrationseinheit mit einer Fördereinrichtung vorgesehen, mittels der das Lebensmittel in Richtung des Lebensmittelauslasses bewegt wird. An die Vormisch- und Hydrationseinheit schließt sich eine Kneteinheit an, welche zwei ineinandergreifende, gegenläufige Knetschrauben aufweist, mit denen das Lebensmittel vom Einlass der Kneteinheit bis zum Auslass der Vorrichtung geknetet und gefördert wird.

WO-A-92/17068 offenbart eine Vorrichtung gemäß dem Oberbegriff des Anspruchs 1 und ein Verfahren gemäß dem Oberbegriff des Anspruchs 9.

Ausgehend von den vorstehenden Überlegungen lag der Erfindung somit die Aufgabe zugrunde, eine Vorrichtung und ein Verfahren anzugeben, welches eine Steigerung der Produktqualität bei möglichst gleichbleibender Wirtschaftlichkeit erzielt.

Die Erfindung löst die ihr zugrunde liegende Aufgabe bei einer Vorrichtung der eingangs genannten Art durch eine Vorrichtung gemäß Anspruch 1, wobei die zweite Knetwelle und die erste Knetwelle parallel zueinander angeordnet sind und derart miteinander synchronisiert antreibbar sind, dass die ersten Knetelemente der ersten Knetwelle und die zweiten Knetelemente der zweiten Knetwelle gegenläufig und ineinandergreifend rotieren." wobei das Knetmittel dazu eingerichtet ist. das in der Behandlungskammer befindliche Lebensmittel zu falten, zu dehnen und zu kollidieren.

Unter dem Begriff des Kollidierens wird hierbei das Zusammenführen bzw. Zusammendrücken von Teilen des Lebensmittels verstanden, die zuvor mittels Falten und/oder Dehnen deplatziert worden sind, mit denselben und/oder anderen Teilen des Lebensmittels. Der Erfindung liegt die Erkenntnis zugrunde, dass die Homogenität des Lebensmittels im Anschluss an die Förderung mittels eines Volumenförderers verbessert wird, indem das Lebensmittel möglichst schonend geknetet wird. Hierbei sorgen insbesondere die Mechanismen des Faltens, Dehnens und Kollidierens dafür, dass das Lebensmiltelgefüge homogenisiert wird und beispielsweise bei Teigwaren die Teigentwicklung vorteilhaft unterstützt wird; infolge des Faltens, Dehnens und Kollidierens wird hierbei die Klebernetzwerkbildung unterstützt. Der Vorteil der Erfindung liegt insbesondere darin, dass diese eine Behandlungskammer innerhalb des geschlossenen Förderwegs vorsieht, welche das Lebensmittel im Anschluss an das Fördern durch die Fördereinrichtung automatisch durchläuft, während es von der Fördereinrichtung in Richtung des Lebensmittel-Auslasses der Vorrichtung gefördert wird. Es ist somit ein platzsparendes Unterbringen der Nachbehandlung in einer Behandlungskammer ermöglicht, und der ansonsten notwendig gewesene zusätzliche apparative Aufwand externer Behandlungseinheiten mit Knetmitteln entfällt.

Das Knetmittel weist eine Knetwelle und ein oder mehrere auf der Knetwelle angeordnete Knetelemente auf.

Weiter vorzugsweise weist das Knetmittel ein oder mehrere Halteelemente auf, die vorzugsweise als Haken, Stab und/oder Abstreifer ausgebildet sind, die unbeweglich in der Behandlungskammer angeordnet und dazu eingerichtet sind, ein Mitdrehen des gesamten Lebensmittels mit dem Knetmittel zu verhindern.

Gemäß der Erfindung weist das Knetmittel eine zweite Knetwelle und ein oder mehrere auf der zweiten Knetwelle angeordnete Knetelemente auf.

Die zweite Knetwelle und die erste Knetwelle sind parallel zueinander angeordnet und derart miteinander synchronisiert antreibbar, dass die Knetelemente der ersten Knetwelle und die Knetelemente der zweiten Knetwelle gegenläufig und ineinandergreifend rotieren.

Die Knetelemente der ersten und/oder zweiten Knetwelle sind vorzugsweise einzeln oder satzweise wechselbar. Weiter vorzugsweise sind verschiedene Sätze von Knetelementen vorgesehen, die unterschiedliche Geometrien und somit unterschiedliche Verdrängungscharakteristika aufweisen. Je nach Art des geforderten und nachzubehandelnden Lebensmittels können insbesondere mit Blick auf die Viskosität des Lebensmittels speziell angepasste Knetelemente bedarfsweise eingesetzt werden.

Gemäß einer weiteren vorteilhaften Ausführungsform weist die Behandlungskammer einen Kammer-Einlass, einen Kammer-Auslass und eine sich von dem Einlass zu dem Auslass erstreckende Mittelachse auf, wobei die erste Knetwelle und/oder die zweite Knetwelle des Knetmittels parallel zu der Mittelachse ausgerichtet sind. Dies hat den Vorteil, dass das Lebensmittel, welches im Wesentlichen in Richtung der Mittelachse auf dem geschlossenen Förderweg der Vorrichtung von dem Kammer-Einlass zu dem Kammer-Auslass in der Behandlungskammer gefördert wird, von den Knetelementen hauptsächlich quer zur Richtung des Förderwegs erfasst wird. Hierdurch ist die auftretende Scherung des Lebensmittels geringer ausgebildet als bei dem Erfassen durch Knetelemente, welche zusätzlich eine Beschleunigung des Lebensmittels in Richtung der Mittelachse bzw. in Gegenrichtung der Mittelachse bewirken würden.

In einer bevorzugten Ausführungsform der Vorrichtung gemäß der vorliegenden Erfindung weist die Fördereinrichtung eine Flügelzellenpumpe, Zahnradpumpe, oder Drehkolbenpumpe auf. Besonders bevorzugt weist die Vorrichtung allerdings eine Fördereinrichtung auf, welche eine Schneckenpumpe mit einer Förderkammer, einem Förderkammer-Einlass, einem Förderkammer-Auslass, einer (ersten) Förderwelle und einer darauf gelagerten, sich zwischen dem Einlass und dem Auslass erstreckenden Förderschnecke aufweist.

Alternativ weist eine besonders bevorzugte Vorrichtung gemäß der vorliegenden Erfindung eine Fördereinrichtung auf, welche eine Doppelspindelpumpe mit einer Förderkammer, einem Förderkammer-Einlass, einem Förderkammer-Auslass, einer ersten Förderwelle und einer zweiten Förderwelle, sowie jeweils einer auf der ersten oder zweiten Förderwelle gelagerten, sich zwischen dem Einlass und dem Auslass erstreckenden Förderschecke aufweist.

Die erfindungsgemäße Vorrichtung wird dadurch vorteilhaft weitergebildet, dass ein auslassseitiger Abschnitt der Förderschnecke oder der Förderspindeln relativ zu einem benachbarten Abschnitt (der von dem Auslass weiter beabstandet ist) eine reduzierte Steigung aufweist. Infolge der reduzierten Steigung in dem auslassseitigen Abschnitt der Förderschnecke oder der Förderspindeln kommt es zu einer Verdichtung des Lebensmittels. Die Kammerabschnitte in diesem Abschnitt fördern pro Umdrehung ein geringeres Volumen als die davorliegenden stromaufwärts angeordneten Abschnitte. Hierdurch wird der besondere Vorteil erreicht, dass die Fördereinrichtung gleichzeitig als Portioniereinrichtung wirkt.

Unter Portionieren wird vorliegend verstanden, dass die Portioniereinrichtung dazu eingerichtet ist, eine vollständige Befüllung des Förderwegs und einen homogenen Massenstrom des geförderten Lebensmittels zu erreichen. Eine Portioniereinrichtung im vorliegende Sinne ist nicht zu verstehen als eine Einrichtung zur Vereinzelung von Teilen des geförderten Lebensmittels, sondern zur Herstellung eines "gleichlaufs" des Lebensmittels dergestalt, dass bei den der Portioniereinrichtung nachfolgenden Einrichtungen pro Betrachtungsintervall (beispielsweise pro Pumpen-Umdrehung oder pro Zeiteinheit) immer genauso viel Lebensmittel eintritt und austritt, wie aus der Portioniereinrichtung austritt.

Die erfindungsgemäße Vorrichtung wird insbesondere dadurch vorteilhaft weitergebildet, dass die erste Knetwelle des Knetmittels koaxial zu der ersten Förderwelle der Fördereinrichtung ausgerichtet ist und vorzugsweise kraftübertragend mit dieser verbunden ist. In einer einfachen und besonders vorteilhaften Ausgestaltung ist die erste Knetwelle koaxial und starr mit der ersten Förderwelle verbunden, so dass ein einziger Antrieb gleichzeitig die Förderwelle und die Knetwelle antreibt. Hierdurch wird eine Minimierung des Bauraums und der Antriebsmittel erreicht. Zudem kann durch diese Maßnahme die Behandlungskammer so nahe wie möglich an die Förderkammer der Fördereinrichtung angenähert werden.

Gemäß einer bevorzugten Ausführungsform sind die Förderkammer und die Behandlungskammer als eine durchgehende Kammer ausgebildet.

Besonders bevorzugt ist bei den Ausführungsformen mit einer zweiten Knetwelle (und mit einer Fördereinrichtung mit zwei Förderwellen) auch die zweite Knetwelle des Knetmittels koaxial zu der zweiten Förderwelle der Fördereinrichtung ausgerichtet. Vorzugsweise ist auch die zweite Knetwelle kraftübertragend mit der zweiten Förderwelle der Fördereinrichtung verbunden. Bezüglich der zweiten Knetwelle gilt ebenso die besonders bevorzugte und einfache Ausgestaltung, nach welcher die zweite Knetwelle starr mit der zweiten Förderwelle verbunden ist.

Werden gemäß alternativen bevorzugten Ausführungsformen keine der vorstehend beschriebenen Förderschnecken bzw. -spindeln mit variabler Steigung eingesetzt, sondern andere bevorzugte Fördereinrichtungen, so hat es sich als vorteilhaft herausgestellt, eine Portioniereinrichtung in der Vorrichtung vorzusehen, welche stromabwärts der Fördereinrichtung in dem Förderweg angeordnet ist.

Weiter ist die Portioniereinrichtung stromaufwärts der Behandlungskammer in dem Förderweg angeordnet. Dies sorgt für eine homogenisierte Befüllung der Behandlungskammer und verbessert somit die Konstanz der durch den Lebensmittel-Auslass aus der Vorrichtung abgegebenen Produktqualität.

Die Erfindung löst die ihr zugrundeliegende Aufgabe auch bei einem Verfahren gemäß Anspruch 9.

Das erfindungsgemäße Verfahren umfasst vorzugweise weiter den Schritt: Verhindern des Mitdrehens des gesamten Lebensmittels mit dem Knetmittel mittels Halteelementen, vorzugsweise als Haken, Stab, und/oder Abstreifer ausgebildet, in der Behandlungskammer.

Weiter vorzugsweise umfasst das Verfahren den Schritt: Portionieren des geförderten Lebensmittels mittels der Fördereinrichtung, welche einen auslassseitigen Abschnitt einer Förderschnecke oder zweiter Förderspindeln mit einer relativ zu einem benachbarten Abschnitt reduzierten Steigung, oder mittels einer Portioniereinrichtung stromabwärts von der Fördereinrichtung in dem Förderweg.

Weiter erfolgt das Portionieren gemäß dem erfindungsgemäßen Verfahren stromaufwärts der Behandlungskammer in dem Förderweg.

Die Erfindung wird im Folgenden anhand bevorzugter Ausführungsformen und unter Bezugnahme auf die beiliegenden Figuren näher beschrieben. Hierbei zeigen:
- Fig. 1: eine schematische, allgemein für alle Ausführungsbeispiele gültige, Darstellung einer erfindungsgemäßen Vorrichtung,
- Fig. 2: eine schematische Darstellung einer erfindungsgemäßen Vorrichtung gemäß einem Ausführungsbeispiel,
- Fig. 3: eine schematische Darstellung einer Vorrichtung gemäß einem zweiten Beispiel,
- Fig. 4: eine schematische Darstellung einer erfindungsgemäßen Vorrichtung gemäß einem Ausführungsbeispiel,
- Fig. 5: eine schematische Darstellung einer erfindungsgemäßen Vorrichtung gemäß einem Ausführungsbeispiel,
- Fig. 6: eine schematische Darstellung einer erfindungsgemäßen Vorrichtung gemäß einem Ausführungsbeispiel,
- Fig. 7: eine Seitenansicht eines Teils der erfindungsgemäßen Vorrichtung gemäß dem ersten oder zweiten Ausführungsbeispiel,
- Fig. 8: eine Projektion der Seitenansicht aus Figur 6, und
- Fig. 9: eine Projektion der Seitenansichten aus den Figuren 6 und 7.

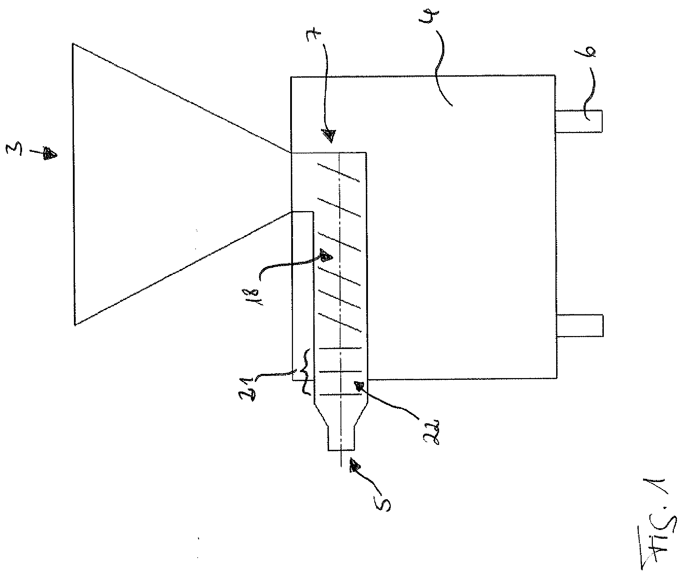

Die in Figur 1 gezeigte schematische Darstellung einer Vorrichtung gemäß der Erfindung zur Verarbeitung eines Lebensmittels, insbesondere zur Verarbeitung von Teig, repräsentiert in ihrem prinzipiellen Aufbau auch die Vorrichtungen der nachfolgend beschriebenen einzelnen Ausführungsbeispiele. Die Vorrichtung 1 weist einen Lebensmittel-Einlass 3 auf, welcher in eine Fördereinrichtung 7 mündet. Die Vorrichtung 1 weist weiterhin einen Lebensmittel-Auslass 5 auf, welcher zum Ausgeben des verarbeiteten Lebensmittels aus der Vorrichtung 1 hinaus eingerichtet ist. Zwischen dem Lebensmittel-Einlass 3 und dem Lebensmittel-Auslass 5 erstreckt sich ein Förderweg.

Teil des Förderwegs ist die Fördereinrichtung 7. innerhalb der Fördereinrichtung 7 sind Fördermittel 18 angeordnet, welche innerhalb des Förderwegs, welcher geschlossen ausgebildet ist, das Lebensmittel von dem Lebensmittel-Einlass 3 in Richtung des Lebensmittel-Auslasses 5 fördern. Der Fördereinrichtung 7 nachgeschaltet ist (stromabwärts von dieser) eine Behandlungskammer 21 angeordnet. Die Behandlungskammer 21 ist optional durchgängig mit der Fördereinrichtung 7 oder als separate Kammer ausgebildet. Innerhalb der Behandlungskammer 21 ist ein Knetmittel 22 angeordnet, welches rotatorisch antreibbar ist und dazu eingerichtet, das in der Behandlungskammer 21 befindliche Lebensmittel zu falten, zu dehnen und zu kollidieren.

Die Fördermittel 18 sind entsprechend verschiedener bevorzugter Ausführungsformen gemäß der Erfindung optional unterschiedlich ausgebildet, was auch nachfolgend unter Bezugnahme auf die verschiedenen Ausführungsbeispiele erläutert wird.

Die Vorrichtung 1 gemäß Figur 1 weist einen Grundkörper 4 mit einem Gehäuse auf, welcher mit Fußpunkten 6 zur Aufstellung am Betriebsort ausgerüstet ist.

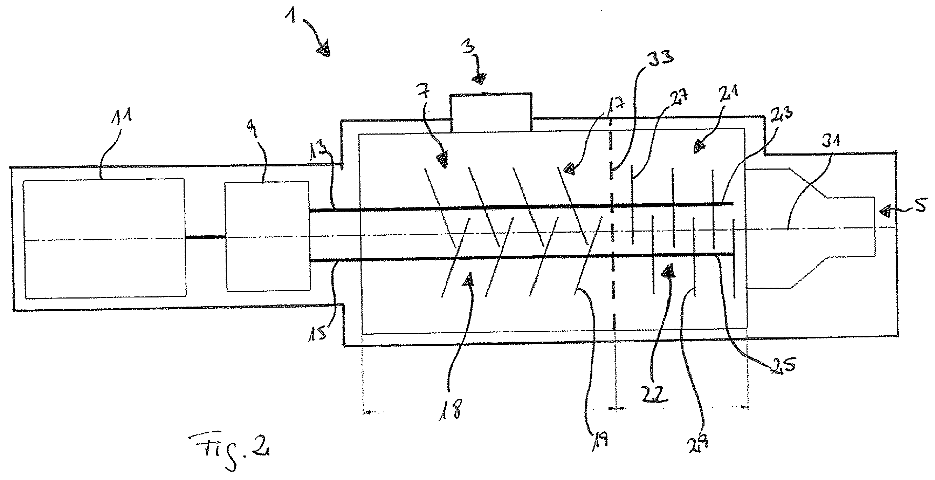

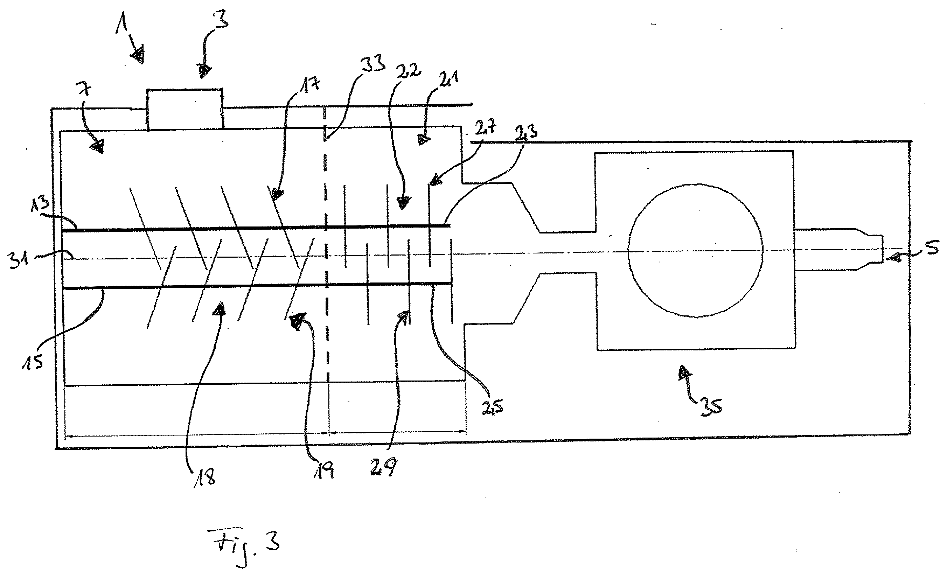

Das in Figur 2 dargestellte Ausführungsbeispiel sowie die übrigen, in den Figuren 3 bis 6 dargestellten Ausführungsbeispiele weisen strukturelle Ähnlichkeiten auf. Daher sind gleiche Elemente mit den gleichen Bezugszeichen versehen.

Die Fördereinrichtung 7 der in Figur 2 schematisch dargestellten Vorrichtung 1 ist von einem Getriebe 9 und einem Motor 11 antreibbar. Das Getriebe 9 ist dazu eingerichtet, eine erste Förderwelle 13 und eine zweite Förderwelle 15 synchronisiert gegenläufig anzutreiben. Auf der ersten Förderwelle 13 ist innerhalb der Fördereinrichtung 7 eine erste Förderspindel 17 angeordnet, während auf der zweiten Förderwelle 15 eine zweite Förderspindel 19 angeordnet ist.

In der Behandlungskammer 21 ist das Knetmittel 22 rotatorisch treibbar angeordnet. Das Knetmittel 22 gemäß Figur 2 weist eine erste Knetwelle 23 sowie eine zweite Knetwelle 25 auf. Auf der ersten Knetwelle 23 sind mehrere (erste) Knetelemente 27 angeordnet. Auf der zweiten Knetwelle 25 sind mehrere zweite Knetelemente 29 angeordnet. Die erste Knetwelle 23 und die zweite Knetwelle 25 sind parallel zu einer Mittelachse 31 angeordnet. Die erste Knetwelle 23 ist gemäß Ausführungsbeispiel aus Figur 2 koaxial zu der ersten Förderwelle 13 angeordnet. Die zweite Knetwelle 25 ist koaxial zu der zweiten Förderwelle 15 angeordnet. Die jeweilige Knetwelle 23, 25 ist vorzugsweise mit der jeweilig koaxial angeordneten Förderwelle 13, 15 kraftübertragend, besonders bevorzugt starr verbunden. Die Behandlungskammer 21 ist vorzugsweise als separate Kammer ausgebildet, die mittels einer Kammerwand 33 von einer Förderkammer der Fördereinrichtung 7 getrennt ist. Gemäß einer alternativen Ausgestaltung sind die Fördereinrichtung 7 und das in der Behandlungskammer 21 angeordnete Knetmittel 22 gemeinsam in einer Kammer angeordnet, wobei die Trennwand 33 entfällt, was durch die gestrichelte Linie angedeutet ist.

Im Betrieb der Vorrichtung 1 wird zur Verarbeitung des Lebensmittels das Lebensmittel mittels des Lebensmittel-Einlasses 3 in die Fördereinrichtung 7 eingeführt. Das eingeführte Lebensmittel wird von der Fördereinrichtung 7 in dem geschlossenen Förderweg in Richtung des Lebensmittel-Auslasses 5 gefördert. Auf dem Weg entlang des geschlossenen Förderwegs in Richtung des Lebensmittel-Auslasses 5 wird das Lebensmittel in der Behandlungskammer 21 aufgenommen, welche stromabwärts der Fördereinrichtung 7 angeordnet ist. In der Behandlungskammer 21 wird das Lebensmittel mittels rotatorischen Antreibens des Knetmittels 22, vorzugsweise der ersten Knetwelle 23 und der zweiten Knetwelle 25 gefaltet, gedehnt und kollidiert, so dass sich eine Homogenisierung des Lebensmittels einstellt. Das homogenisierte Lebensmittel wird sodann in Richtung des Lebensmittel-Auslasses 5 und schließlich aus dem Lebensmittel-Auslass 5 heraus gefördert und abgegeben.

Die erste Knetwelle 23 und die zweite Knetwelle 25 werden hierbei derart angetrieben, dass die Knetelemente 27 der ersten Knetwelle 23 und die zweiten Knetelemente 29 der zweiten Knetwelle 25 gegenläufig und ineinandergreifend rotieren.

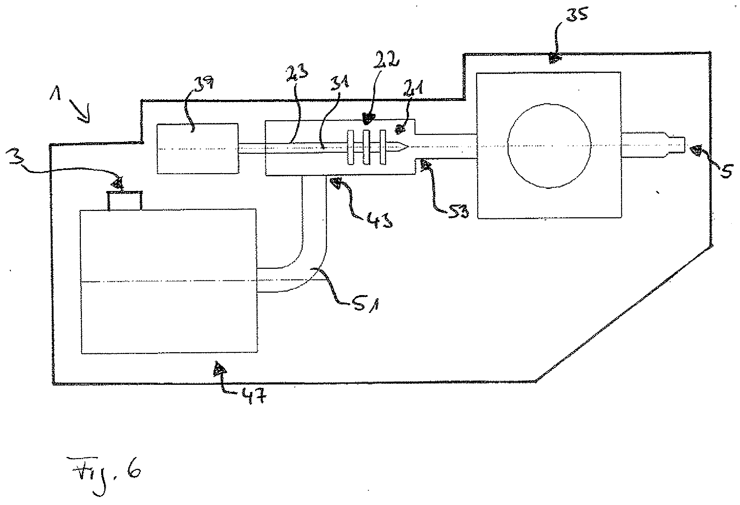

Die Fördereinrichtung 7, welche in Figur 2 schematisch dargestellt ist, ist vorzugsweise gemäß dem Ausführungsbeispiel aus den Figuren 6 bis 8 ausgebildet.

Die in Figur 3 schematisch dargestellte Vorrichtung 1, in welcher auf die Darstellung des Getriebes und des Motors verzichtet wurde, unterscheidet sich von dem in Figur 2 gezeigten Aufbau dadurch, dass stromabwärts der Behandlungskammer 21 eine Portioniereinheit 35 angeordnet ist. Das in der Behandlungskammer 21 homogenisierte Lebensmittel wird in die Portioniereinheit 35 eingeführt und von dieser in Richtung des Lebensmittel-Auslasses 5 abgegeben.

Das in Figur 3 gezeigte Beispiel ist insbesondere vorteilhaft für Anlagen, in welchen eine Fördereinrichtung 7 mit Fördermitteln in Form einer Doppelspindelpumpe ausgebildet ist, wobei die Doppelspindelpumpe eine konstante Spindelsteigung aufweist.

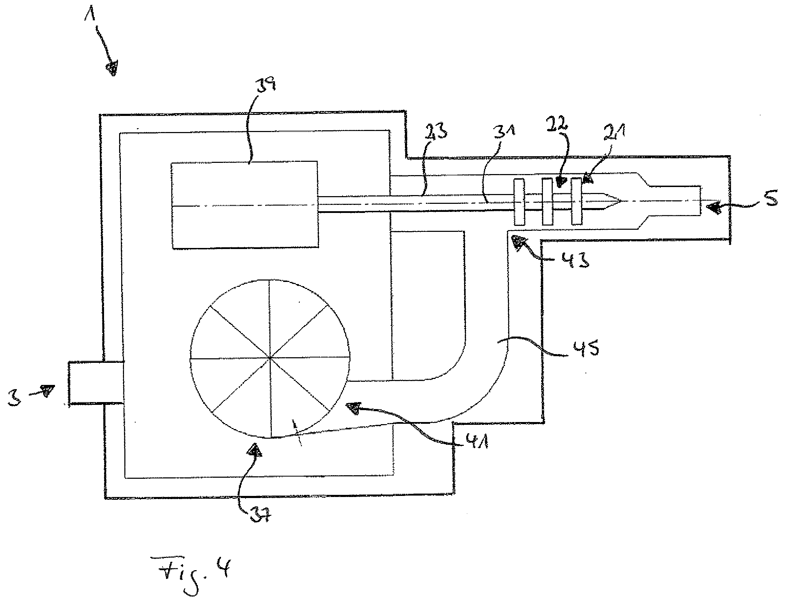

Das in Figur 4 gezeigte Ausführungsbeispiel der Vorrichtung 1 unterscheidet sich von den Ausführungsbeispielen der Figuren 2 und 3 dadurch, dass die Behandlungskammer 21 zwar stromabwärts von der Fördereinheit angeordnet ist, jedoch nicht unmittelbar anschließend an diese angeordnet ist. Als Fördereinheit ist gemäß Figur 4 eine Einheit mit Fördermitteln in Form einer Flügelzellenpumpe 37 vorgesehen. Optional wird zusätzlich zu der Flügelzellenpumpe 37 eine (nicht dargestellte) Schneckenpumpe oder ein anderer Volumenförderer vorgeschaltet, der zum vollständigen Befüllen der Kammerelemente der Flügelzellenpumpe und sukzessive des gesamten geschlossenen Förderwegs eingerichtet ist.

Die Flügelzellenpumpe 37 weist einen Auslass 41 auf, welcher mittels einer Leitung 45 mit einem Einlass 43 der Behandlungskammer 21 verbunden ist. In der Behandlungskammer 21 ist das Knetmittel 22 mit einer Knetwelle 23 angeordnet. Die Knetwelle 23 ist koaxial zu der Mittelachse 31 ausgebildet. Das gemäß Figur 4 vorgesehene Knetmittel 22 wird von einem eigenen, (zweiten) Antrieb 39 angetrieben. Der zweite Antrieb 39 und der (nicht dargestellte) (erste) Antrieb der Flügelzellenpumpe 37 sind optional mittels einer elektronischen Steuereinheit synchronisiert betreibbar.

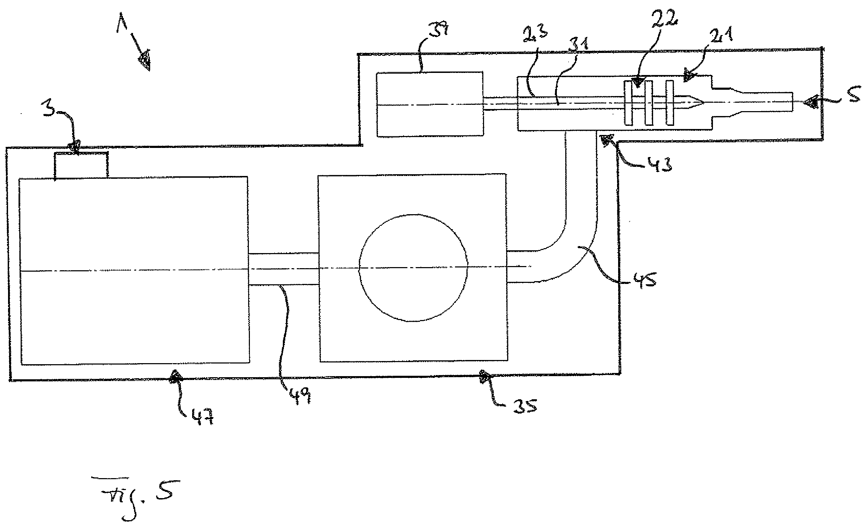

Figur 5 zeigt ein im Vergleich zu Figur 4 allgemeiner gehaltenes Ausführungsbeispiel. Die Vorrichtung 1 gemäß Figur 5 weist eine Fördereinheit 47 auf, welche als Volumenförderer, insbesondere als Zahnradpumpe, Flügelzellenpumpe oder Drehkolbenpumpe ausgebildet ist. Die Fördereinheit 47 ist mittels einer Leitung 49 mit der Portioniereinheit 35 verbunden.

Das in Figur 6 gezeigte Ausführungsbeispiel unterscheidet sich von dem in Figur 5 dargestellten Ausführungsbeispiel dadurch, dass die Portioniereinheit 35 nicht stromaufwärts der Behandlungskammer 21 angeordnet ist, sondern sowohl stromabwärts der Fördereinheit 47 als auch der Behandlungskammer 21. Die Fördereinheit 47 ist mittels einer Leitung 51 mit der Behandlungskammer 21 verbunden, und die Behandlungskammer 21 ist mittels einer Leitung 53 mit der Portioniereinrichtung 35 verbunden.

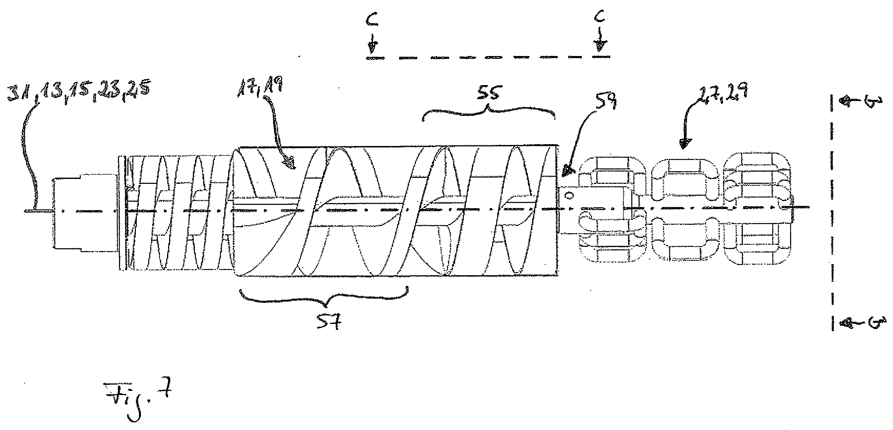

Ein Teil der erfindungsgemäßen Vorrichtung 1 gemäß den Ausführungsbeispielen aus Figuren 2 und 3 ist in den Figuren 7 bis 9 in mehreren Seitenansichten dargestellt. Die

Figuren 7 bis 9 zeigen die erste Förderwelle 13 und die zweite Förderwelle 15, welche parallel zueinander und zu der Mittelachse 31 angeordnet sind. Auf der ersten und zweiten Förderwelle 13, 15 ist jeweils eine erste bzw. zweite Förderspindel 17, 19 angeordnet. Die Förderspindeln 17, 19 weisen in Richtung des Förderwegs (bei bestimmungsgemäßem Einbau in die Vorrichtung 1) einen auslassseitigen Abschnitt 55 auf. Relativ zu einem hierzu benachbarten Abschnitt 57 der Förderspindeln 17, 19 ist die Spindelsteigung in dem auslassseitigen Abschnitt 55 reduziert. Ein Satz der ersten Knetelemente 27 ist auf seiner Knetwelle drehmomentfest mit der ersten Förderwelle 13 verbunden und koaxial zu der ersten Förderspindel 17 angeordnet. Die erste Knetwelle 23 wird gemeinsam mit der ersten Förderwelle 13 angetrieben. Die zweiten Knetelemente 29 sind auf einer zweiten Knetwelle 25 angeordnet, welche drehmomentfest mit der zweiten Förderwelle 15 verbunden ist. Die zweite Knetwelle 25 ist koaxial zu der zweiten Förderwelle 15 angeordnet und wird gemeinsam mit dieser angetrieben. Als Verbindungsstelle zwischen einer Knetwelle 23, 25 und der ihr jeweils zugeordneten ersten oder zweiten Förderwelle 13, 15 ist eine Kupplung durch Bezugszeichen 59 in Figur 7 angedeutet.

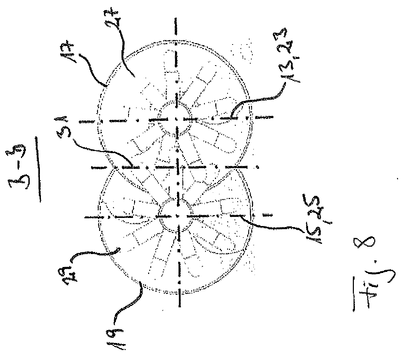

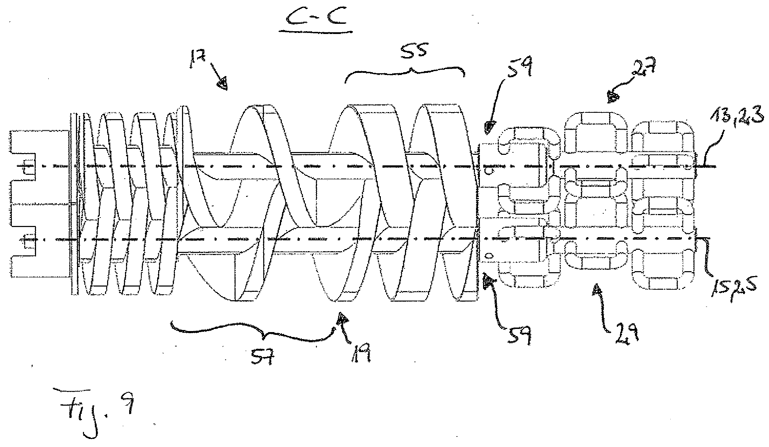

In den Figuren 8 und 9 ist die ineinandergreifende Anordnung der ersten Knetelemente 27 und zweiten Knetelemente 29 dargestellt. Die Achsen 13, 23 einerseits und 15, 25 andererseits weisen vorzugsweise einen gleichen Abstand zu der Mittelachse 31 auf.

## Patentansprüche

1. Vorrichtung (1) zur Verarbeitung eines Lebensmittel, insbesondere zur Verarbeitung von Teig, mit
einem Lebensmittel-Einlass (3), einem Lebensmittel-Auslass (5), einem sich zwischen dem Einlass (3) und dem Auslass (5) erstreckenden geschlossenen Förderweg und einer Fördereinrichtung (7, 37, 47), welche zur Aufnahme des durch den Lebensmittel-Einlass (3) zugeführten Lebensmittels und zur Förderung des Lebensmittels in dem geschlossenen Förderweg in Richtung des Lebensmittel-Auslasses (5) angeordnet ist, mit einer Behandlungskammer (21), welche in dem Fördenrweg stromabwärts der Fördereinrichtung (7, 37, 47) zur Aufnahme und Nachbehandlung des Lebensmittels nachgeschaltet ist, vorzugsweise unmittelbar an diese anschließend, innerhalb welcher ein Knetmittel (22) rotatorisch antreibbar angeordnet ist, wobei das Knetmittel (22) eine Knetwelle (23) und ein oder mehrere auf der Knetwelle angeordnete Knetelemente (27) und eine zweite Knetwelle (25) ein oder mehrere auf der zweiten Knetwelle (25) angeordnete Knetefemente (29) aufweist,
wobei
das Lebensmittel die Behandlungskammer im Anschluss an das Fördern durchläuft, und
die zweite Knetwelle (25) und die erste Knetwelle (23) parallel zueinander angeordnet sind und derart miteinander synchronisiert antreibbar sind, dass die ersten Knetelemente (27) der ersten Knetwelle (23) und die zweiten Knetelemente (29) der zweiten Knetwelle (25) gegenläufig und ineinandergreifend rotieren, und das Knetmittel (22) dazu eingerichtet ist, das In der Behandlungskammer (21) befindliche Lebensmittel zu falten, zu dehnen und zu kollidieren, **dadurch gekennzeichnet, dass** eine Portioniereinrichtung (35), welche stromabwärts der Fördereinrichtung (7, 37, 47) und stromaufwärts der Behandlungskammer (21) in dem Förderweg angeordnet ist.

2. Vorrichtung (1) nach Anspruch 1,
**dadurch gekennzeichnet, dass** das Knetmittel (22) ein oder mehrere Halteelemente aufweist, vorzugsweise als Haken, Stab, und/oder Abstreifer ausgebildet, die unbeweglich in der Behandlungskammer (21) angeordnet und dazu eingerichtet sind, ein Mitdrehen des gesamten Lebensmittels mit dem Knetmittel (22) zu verhindern.

3. Vorrichtung (1) nach einem der vorstehenden Ansprüche,
**dadurch gekennzeichnet, dass** die Behandlungskammer (21) einen Kammer-Einlass, einen Kammer-Auslass und eine sich von dem Einlass zu dem Auslass erstreckende Mittelachse (31) aufweist, und die erste Knetwelle (23) und/oder zweite Knetwelle (25) des Knetmittels (22) parallel zu der Mittelachse (31) ausgerichtet ist.

4. Vorrichtung (1) nach einem der vorstehenden Ansprüche,
**dadurch gekennzeichnet, dass** die Fördereinrichtung (7, 37, 47) eine Schneckenpumpe mit einer Förderkammer, einem Förderkammer-Einlass, einem Förderkammer-Auslass, einer Förderwelle (13) und einer darauf gelagerten, sich zwischen dem Einlass und dem Auslass erstreckenden Förderschnecke (17) aufweist,

5. Vorrichtung (1) nach einem der vorstehenden Ansprüche,
**dadurch gekennzeichnet, dass** die Fördereinrichtung (7, 37, 47) eine Doppelspindelpumpe mit einer Förderkammer (7), einem Förderkammer-Einlass, einem Förderkammer-Auslass, einer ersten Förderwelle (13) und einer zweiten Förderwelle (15), sowie jeweils einer auf der ersten oder zweiten Förderwelle gelagerten, sich zwischen dem Einlass und dem Auslass erstreckenden Förderschnecke (17, 19) aufweist,

6. Vorrichtung (1) nach einem der Ansprüche 4 oder 5,
**gekennzeichnet durch** einen auslassseitigen Abschnitt (55) der Förderschnecke oder der Förderspindeln, welcher relativ zu einem benachbarten Abschnitt (57) eine reduzierte Steigung aufweist.

7. Vorrichtung (1) nach einem der vorstehenden Ansprüche,
**dadurch gekennzeichnet, dass** die erste Knetwelle (23) des Knetmittel (22) koaxial zu der ersten Förderwelle (13) der Fördereinrichtung (7, 37, 47) ausgerichtet ist,
vorzugsweise kraftübertragend mit dieser verbunden ist.

8. Vorrichtung (1) nach Anspruch 7,
**dadurch gekennzeichnet, dass** die zweite Knetwelle (25) des Knetmittels (22) koaxial zu der zweiten Förderwelle (15) der Fördereinrichtung (7, 37, 47) ausgerichtet ist, vorzugsweise kraftübertragend mit dieser verbunden ist.

9. Verfahren zur Verarbeitung eines Lebensmittel, insbesondere zur Verarbeitung von Teig, umfassend die Schritte:
Einführen eines Lebensmittels in eine Fördereinrichtung (7. 37, 47), die in einem geschlossenen Förderweg angeordnet ist, mittels eines Lebensmittel-Einlasses (3),
Fördern des Lebensmittels in dem geschlossenen Förderweg in Richtung eines Lebensmittel-Auslasses (5),
Aufnehmen des Lebensmittels in eine Behandlungskammer (21), welche in dem Förderweg stromabwärts der Fördereinrichtung (7, 37, 47) nachgeschaltet ist,
Nachbehandeln des Lebensmittels in der Behandlungskammer (21) mittels rotatorischen Antreibens eines Knetmittels (22), wobei das Lebensmittel die Behandlungskammer im Anschluss an das Fördern durchläuft, und
synchronisiertes Antreiben einer ersten Knetwelle (23) und einer zweiten Knetwelle (25) des Knetmittels (22) derart, dass erste Knetelemente (27) der ersten Knetwelle (23) und zweite Knetelemente (29) der zweiten Knetwelle (25) gegenläufig und ineinandergreifend rotieren, wobei das Lebensmittel mittels des Knetmittels (22) gefaltet, gedehnt und kollidiert wird, **dadurch gekennzeichnet, dass** das Verfahren den folgenden Schritt umfasst:
Portionieren des geförderten Lebensmittels
- mittels der Fördereinrichtung (7), welche einen auslassseitigen Abschnitt (55) einer Förderschnecke oder zweier Förderspindeln mit einer relativ zu einem benachbarten Abschnitt (57) reduzierten Steigung, oder
- mittels einer Portioniereinrichtung (35) stromabwärts von der Fördereinrichtung (7, 37, 47) in dem Förderweg,
wobei das Portionieren stromaufwärts der Behandlungskammer (21) in dem Förderweg erfolgt.

10. Verfahren nach Anspruch 9, umfassend den Schritt:
Verhindern des Mitdrehens des gesamten Lebensmittels mit dem Kneimithel (22) mittels Halteelementen, vorzugsweise als Haken, Stab, und/oder Abstreifer ausgebildet, in der Behandlungskammer (21).

## Claims

1. Device (1) for processing a food product, in particular for processing dough, having
a food product inlet (3), a food product outlet (5), a closed conveying path which extends between the inlet (3) and the outlet (5) and having a conveying device (7, 37, 47) which is arranged to receive the food product supplied through the food product inlet (3) and to convey the food product in the closed conveying path in the direction of the food product outlet (5),
having a processing chamber (21) which is arranged in the conveying path downstream of the conveying device (7, 37, 47) in order to receive and subsequently process the food product, preferably in a directly successive manner and within which a kneading means (22) is arranged so as to be able to be driven in a rotary manner, the kneading means (22) having a kneading shaft (23) and one or more kneading elements (27) which are arranged on the kneading shaft and a second kneading shaft (25) having one or more kneading elements (29) which are arranged on the second kneading shaft (25),
the food product passing through the processing chamber following the conveying, and
the second kneading shaft (25) and the first kneading shaft (23) being arranged parallel with each other and being able to be driven in such a synchronised manner with respect to each other that the first kneading elements (27) of the first kneading shaft (23) and the second kneading elements (29) of the second kneading shaft (25) rotate in opposite directions and so as to engage one in the other, and the kneading means (22) being configured to fold, stretch and collide the food product located in the processing chamber (21), **characterised in that** a portioning device (35) is arranged downstream of the conveying device (7, 37, 47) and upstream of the processing chamber (21) in the conveying path.

2. Device (1) according to claim 1,
**characterised in that** the kneading means (22) has one or more retention elements, preferably in the form of a hook, rod and/or scraper, which are arranged in a non-movable manner in the processing chamber (21) and which are configured to prevent rotation of the entire food product with the kneading means (22).

3. Device (1) according to either of the preceding claims,
**characterised in that** the processing chamber (21) has a chamber inlet, a chamber outlet and a centre axis (31) which extends from the inlet to the outlet and the first kneading shaft (23) and/or the second kneading shaft (25) of the kneading means (22) is orientated parallel with the centre axis (31).

4. Device (1) according to any one of the preceding claims,
**characterised in that** the conveying device (7, 37, 47) has a helical pump having a conveying chamber, a conveying chamber inlet, a conveying chamber outlet, a conveying shaft (13) and a helical conveying member (17) which is supported thereon and which extends between the inlet and the outlet.

5. Device (1) according to any one of the preceding claims,
**characterised in that** the conveying device (7, 37, 47) has a dual spindle pump having a conveying chamber (7), a conveying chamber inlet, a conveying chamber outlet, a first conveying shaft (13) and a second conveying shaft (15), and in each case a helical conveying member (17, 19) which is supported on the first or second conveying shaft and which extends between the inlet and the outlet.

6. Device (1) according to either claim 4 or claim 5,
**characterised by** an outlet-side portion (55) of the helical conveying member or the conveying spindles, which have a reduced pitch relative to an adjacent portion (57).

7. Device (1) according to any one of the preceding claims,
**characterised in** the first kneading shaft (23) of the kneading means (22) is orientated coaxially relative to the first conveying shaft (13) of the conveying device (7, 37, 47), preferably connected thereto in a force-transmitting manner.

8. Device (1) according to claim 7,
**characterised in that** the second kneading shaft (25) of the kneading means (22) is orientated coaxially relative to the second conveying shaft (15) of the conveying device (7, 37, 47), preferably connected thereto in a force-transmitting manner.

9. Method for processing a food product, in particular for processing dough, comprising the steps of:
introducing a food product into a conveying device (7, 37, 47) which is arranged in a closed conveying path, by means of a food product inlet (3),
conveying the food product in the closed conveying path in the direction of a food product outlet (5),
receiving the food product in a processing chamber (21), which is arranged in the conveying path downstream of the conveying device (7, 37, 47),
subsequently processing the food product in the processing chamber (21) by means of rotationally driving a kneading means (22), the food product passing through the processing chamber following the conveying action, and
synchronised driving of a first kneading shaft (23) and a second kneading shaft (25) of the kneading means (22) in such a manner that first kneading elements (27) of the first kneading shaft (23) and second kneading elements (29) of the second kneading shaft (25) rotate in opposing directions and so as to engage one in the other,
the food product being folded, stretched and collided by means of the kneading means (22), **characterised in that** the method comprises the following step of:
portioning the conveyed food product
- by means of the conveying device (7) which has an outlet-side portion (55) of a helical conveying member or two conveying spindles having a pitch which is reduced relative to an adjacent portion (57), or
- by means of a portioning device (35) downstream of the conveying device (7, 37, 47) in the conveying path,
the portioning being carried out upstream of the processing chamber (21) in the conveying path.

10. Method according to claim 9, comprising the step of:
preventing the rotation of the entire food product with the kneading means (22) by means of retention elements, which are preferably in the form of a hook, rod and/or scraper, in the processing chamber (21).

## Revendications

1. Dispositif (1) servant à transformer un produit alimentaire, en particulier servant à transformer de la pâte, comprenant
une entrée pour produit alimentaire (3), une sortie pour produit alimentaire (5), une voie d'acheminement fermée s'étendant entre l'entrée (3) et la sortie (5), et un système d'acheminement (7, 37, 47), qui est disposé afin de loger le produit alimentaire amené par l'entrée pour produit alimentaire (3) et d'acheminer le produit alimentaire dans la voie d'acheminement fermée en direction de la sortie pour produit alimentaire (5), comprenant une chambre de traitement (21), qui est installée en aval dans la voie d'acheminement en aval du système d'acheminement (7, 37, 47) afin de loger et de traiter ultérieurement le produit alimentaire, de préférence directement après ledit système d'acheminement, à l'intérieur de laquelle est disposé de manière à pouvoir être entraîné en rotation un moyen de pétrissage (22), sachant que le moyen de pétrissage (22) présente un arbre de pétrissage (23) et un ou plusieurs éléments de pétrissage (27) disposés sur l'arbre de pétrissage et un deuxième arbre de pétrissage (25) et un ou plusieurs éléments de pétrissage (29) disposés sur le deuxième arbre de pétrissage (25),
sachant que le produit alimentaire traverse la chambre de traitement directement après l'acheminement, et
que le deuxième arbre de pétrissage (25) et le premier arbre de pétrissage (23) sont disposés de manière parallèle l'un à l'autre et peuvent être entraînés de manière synchronisée l'un avec l'autre de telle manière que les premiers éléments de pétrissage (27) du premier arbre de pétrissage (23) et les deuxièmes éléments de pétrissage (29) du deuxième arbre de pétrissage (25) tournent en sens inverse et de manière à s'imbriquer les uns dans les autres, et que le moyen de pétrissage (22) est mis au point pour plier, étirer et faire entrer en collision le produit alimentaire se trouvant dans la chambre de traitement (21), **caractérisé en ce qu'**un système de formation de portions (35) est disposé dans la voie d'acheminement en aval du système d'acheminement (7, 37, 47) et en amont de la chambre de traitement (21).

2. Dispositif (1) selon la revendication 1,
**caractérisé en ce que** le moyen de pétrissage (22) présente un ou plusieurs éléments de maintien, réalisés de préférence sous la forme de crochets, d'une barre et/ou de racleurs, lesquels sont disposés de manière immobile dans la chambre de traitement (21) et sont mis au point afin d'empêcher l'entraînement en rotation du produit alimentaire entier avec le moyen de pétrissage (22).

3. Dispositif (1) selon l'une des revendications précédentes,
**caractérisé en ce que** la chambre de traitement (21) présente une entrée de chambre, une sortie de chambre et un axe central (31) s'étendant depuis l'entrée vers la sortie, et **en ce que** le premier arbre de pétrissage (23) et/ou le deuxième arbre de pétrissage (25) du moyen de pétrissage (22) sont orientés de manière parallèle par rapport à l'axe central (31).

4. Dispositif (1) selon l'une des revendications précédentes,
**caractérisé en ce que** le système d'acheminement (7, 37, 47) présente une pompe à vis pourvue d'une chambre d'acheminement, d'une entrée de chambre d'acheminement, d'une sortie de chambre d'acheminement, d'un arbre d'acheminement (13) et d'une vis sans fin d'acheminement (17) montée sur l'arbre d'acheminement, s'étendant entre l'entrée et la sortie.

5. Dispositif (1) selon l'une des revendications précédentes,
**caractérisé en ce que** le système d'acheminement (7, 37, 47) présente une pompe à double broche pourvue d'une chambre d'acheminement (7), d'une entrée de chambre d'acheminement, d'une sortie de chambre d'acheminement, d'un premier arbre d'acheminement (13) et d'un deuxième arbre d'acheminement (15), ainsi que respectivement d'une vis sans fin (17, 19) montée sur le premier ou le deuxième arbre d'acheminement, s'étendant entre l'entrée et la sortie.

6. Dispositif (1) selon l'une des revendications 4 ou 5,
**caractérisé par** une section côté sortie (55) de la vis sans fin ou des broches d'acheminement, laquelle section présente, par rapport à une section adjacente (57), un pas réduit.

7. Dispositif (1) selon l'une des revendications précédentes,
**caractérisé en ce que** le premier arbre de pétrissage (23) du moyen de pétrissage (22) est orienté de manière coaxiale par rapport au premier arbre d'acheminement (13) du système d'acheminement (7, 37, 47) et est relié, de préférence, à celui-ci de manière à transférer une force.

8. Dispositif (1) selon la revendication 7,
**caractérisé en ce que** le deuxième arbre de pétrissage (25) du moyen de pétrissage (22) est orienté de manière coaxiale par rapport au deuxième arbre d'acheminement (15) du système d'acheminement (7, 37, 47), et est relié, de préférence, à celui-ci de manière transférer une force.

9. Procédé servant à transformer un produit alimentaire, en particulier servant à transformer de la pâte, comprenant les étapes:
d'introdution d'un produit alimentaire dans un système d'acheminement (7, 37, 47), qui est disposé dans une voie d'acheminement fermée, au moyen d'une entrée pour produit alimentaire (3),
d'acheminement du produit alimentaire dans la voie d'acheminement fermée en direction d'une sortie pour produit alimentaire (5),
de logement du produit alimentaire dans une chambre de traitement (21), qui est installée en aval dans la voie d'acheminement en aval du système d'acheminement (7, 37, 47),
de traitement ultérieur du produit alimentaire dans la chambre de traitement (21) au moyen d'un entraînement en rotation d'un moyen de pétrissage (22), sachant que le produit alimentaire traverse la chambre de traitement directement après l'acheminement, et
d'entraînement de manière synchronisée d'un premier arbre de pétrissage (23) et d'un deuxième arbre de pétrissage (25) du moyen de pétrissage (22) de telle manière que des premiers éléments de pétrissage (27) du premier arbre de pétrissage (23) et des deuxièmes éléments de pétrissage (29) du deuxième arbre de pétrissage (25) tournent en sens inverse et de manière à s'imbriquer les uns dans les autres, sachant que le produit alimentaire est plié, étiré et entre en collision avec le moyen de pétrissage (22), **caractérisé en ce que** le procédé comprend l'étape suivante:
former des portions du produit alimentaire acheminé
- au moyen du système d'acheminement (7), lequel présente une section côté sortie (55) d'une vis sans fin ou de deux broches d'acheminement présentant un pas réduit par rapport à une section adjacente (57),
- au moyen d'un système de formation de portions (35) en aval du système d'acheminement (7, 37, 47) dans la voie d'acheminement,
sachant que la formation de portions est effectuée en amont de la chambre de traitement (21) dans la voie d'acheminement.

10. Procédé selon la revendication 9, comprenant l'étape :
d'empêcher l'entraînement en rotation du produit alimentaire entier avec le moyen de pétrissage (22) au moyen d'éléments de maintien, réalisés de préférence sous la forme de crochets, d'une barre et/ou de racleurs, dans la chambre de traitement (21).
